(19) Europäisches Patentamt
European Patent Office
Office européen des brevets

(11) EP 4 718 746 A1

(12) EUROPEAN PATENT APPLICATION
published in accordance with Art. 153(4) EPC

(43) Date of publication:
01.04.2026 Bulletin 2026/14

(21) Application number: 24829797.0

(22) Date of filing: 30.01.2024

(51) International Patent Classification (IPC):
H04B 10/25 (2013.01)

(52) Cooperative Patent Classification (CPC):
H04B 10/25

(86) International application number:
PCT/CN2024/074755

(87) International publication number:
WO 2025/001135 (02.01.2025 Gazette 2025/01)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 30.06.2023 CN 202310801200

(71) Applicant: ZTE CORPORATION
Shenzhen, Guangdong 518057 (CN)

(72) Inventors:
• YAN, Baoluo
  Shenzhen, Guangdong 518057 (CN)
• LIU, Fei
  Shenzhen, Guangdong 518057 (CN)
• YU, Wenbo
  Shenzhen, Guangdong 518057 (CN)
• SHI, Hu
  Shenzhen, Guangdong 518057 (CN)

(74) Representative: Ziebig Hengelhaupt Intellectual
Property Attorneys
Patentanwaltskanzlei PartGmbB
Leipziger Straße 49
10117 Berlin (DE)

(54) **CONTROL METHOD OF MULTIBAND OPTICAL TRANSMISSION SYSTEM, COMMUNICATION DEVICE AND STORAGE MEDIUM**

(57) The present application discloses a control method for a multiband optical transmission system, a communication device, and a storage medium, belonging to the technical field of optical network communication. The control method for the multiband optical transmission system includes: determining multiple power adjustment points in the optical signal transmission multiplexing section of the multiband optical transmission system; and controlling the multiple power adjustment points to jointly adjust an intra-band power and an inter-band power to cause an optical transmission power of the multiband optical transmission system to be in a balanced state.

determining multiple power adjustment points in the optical signal transmission multiplexing section of the multiband optical transmission system — S10

controlling the multiple power adjustment points to jointly adjust an intra-band power and an inter-band power to cause an optical transmission power of the multiband optical transmission system to be in a balanced state — S20

FIG. 2

**Description**

**CROSS-REFERENCE TO RELATED APPLICATIONS**

This application claims priority to Chinese Patent Application No. 202310801200.6, filed June 30, 2023, the entire contents of which are incorporated herein by reference.

**TECHNICAL FIELD**

The present application relates to the technical field of optical communication, and more particularly to a control method for a multiband optical transmission system, a communication device, and a computer-readable storage medium.

**BACKGROUND**

In the field of optical communication, the Stimulated Raman Scattering (SRS) effect is a key factor affecting the performance of a broadband multiband optical transmission system. Because the SRS effect causes power shift from short wavelengths to long wavelengths and power unevenness in the Raman gain spectrum up to about 100 nm, the entire broadband multiband optical transmission system cannot support long-distance transmission of optical signals. Furthermore, in some cases, multiband optical transmission systems exhibit significant nonlinear costs when transmitting high-power optical signal, and the nonlinear effect of optical transmission systems is also an important factor limiting the transmission distance of the system.

**SUMMARY**

The main purpose of the present application is to provide a control method for a multiband optical transmission system, a communication device, and a computer-readable storage medium.

To achieve the above purpose, embodiments of the present application provide a control method for a multiband optical transmission system. The method includes: determining multiple power adjustment points in the optical signal transmission multiplexing section of the multiband optical transmission system; and controlling the multiple power adjustment points to jointly adjust an intra-band power and an inter-band power to cause an optical transmission power of the multiband optical transmission system to be in a balanced state.

Furthermore, embodiments of the present application also provide a communication device, including: a memory, a processor, and a computer program stored in the memory and executable on the processor. The computer program is configured to implement the control method for the multiband optical transmission system as described above.

Furthermore, embodiments of the present application also provide a computer-readable storage medium storing a computer program. When executed by a processor, the computer program implements the control method for the multiband optical transmission system as described above.

**BRIEF DESCRIPTION OF THE DRAWINGS**

FIG. 1 is a structural schematic diagram of an operation device of the hardware operating environment involved in an implementation scheme of the present application.
FIG. 2 is a flowchart illustrating steps of a control method for a multiband optical transmission system provided by an embodiment of an implementation scheme of the present application.
FIG. 3 is a schematic diagram of a power adjustment point involved in an embodiment of a control method for a multiband optical transmission system provided by an implementation scheme of the present application.
FIG. 4 is a flowchart illustrating a power adjustment application process involved in an embodiment of a control method for a multiband optical transmission system provided by an implementation scheme of the present application.
FIG. 5 is a schematic diagram illustrating an equalization effect at a power adjustment receiving end involved in an embodiment of a control method for a multiband optical transmission system provided by an implementation scheme of the present application.

The realization of the purpose, functional characteristics, and advantages of the present application will be further explained in conjunction with the embodiments and with reference to the accompanying drawings.

**DETAILED DESCRIPTION OF THE EMBODIMENTS**

It should be understood that the specific embodiments described herein are merely illustrative of the present application and are not intended to limit the present application.

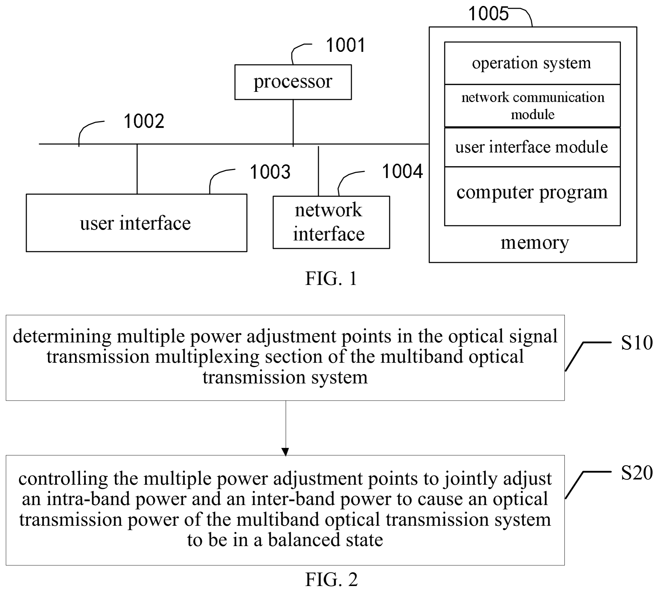

Referring to FIG. 1, which is a structural schematic diagram of an operation device of the hardware operating environment involved in an implementation scheme of the present application.

In this embodiment, the operation device of the hardware operating environment involved in the embodiments of the present application can be a communication device integrated into a multiband optical transmission system or first connected to the multiband optical transmission system, thereby enabling effective to control the multiband optical transmission system. This communication device can be a smartphone, PC (Personal Computer), tablet, or other terminal.

As shown in FIG. 1, the operation device may include: a processor 1001, such as a central processing unit (CPU), a communication bus 1002, a user interface 1003, a network interface 1004, and a memory 1005. The communication bus 1002 is used to realize communication among these components. The user interface 1003 may include a display and an input unit such as a keyboard. In some embodiment, the user interface 1003 may also include a standard wired interface or a wireless interface. In some embodiment, the network interface 1004 may include a standard wired interface or a wireless interface (such as a Wireless-Fidelity (Wi-Fi) interface). Memory 1005 may be high-speed random access memory (RAM) or stable non-volatile memory (NVM), such as a disk drive. In some embodiment, the memory 1005 may also be a storage device independent of the aforementioned processor 1001.

Those skilled in the art will understand that the structure shown in FIG. 1 does not constitute a limitation on the operation device and may include more or fewer components than illustrated, or combine certain components, or have different component arrangements.

As shown in FIG. 1, the memory 1005, as a storage medium, may include an operation system, a data storage module, a network communication module, a user interface module, and computer programs.

In the operation device shown in FIG. 1, the network interface 1004 is mainly used for data communication with other devices; the user interface 1003 is mainly used for data interaction with the user; the processor 1001 and the memory 1005 in the operation device of the present application can be located in the operation device. The operation device invokes the computer program stored in the memory 1005 through the processor 1001 and performs the following operations: determining multiple power adjustment points in the optical signal transmission multiplexing section of the multiband optical transmission system; and controlling the multiple power adjustment points to jointly adjust an intra-band power and an inter-band power to cause an optical transmission power of the multiband optical transmission system to be in a balanced state.

Exemplarily, the power adjustment points include an optical power amplifier, a line optical amplifier, and an optical preamplifier.

The processor 1001 can invoke a computer program stored in the memory 1005 and further perform the following operations: controlling the line optical amplifier and the optical preamplifier to adjust until an total output power of the line optical amplifier, the optical preamplifier, and the optical power amplifier within each band meets a first preset condition; after the total output power meets the first preset condition, controlling the optical power amplifier to adjust the power among each band to cause an output power among each band meets a second preset condition; and after adjusting the power among each band, controlling the optical power amplifier, the line optical amplifier, and the optical preamplifier to adjust a power slope within each band.

Exemplarily, the processor 1001 can invoke a computer program stored in memory 1005 and further perform the following operations: in response to that the total output power does not meet the first preset condition, iteratively executing an operation of the controlling the line optical amplifier and the optical preamplifier to adjust.

Exemplarily, the processor 1001 can invoke a computer program stored in memory 1005 and further perform the following operations: determining that the total output power meets the first preset condition in response to that a first total output power difference and a second total output power difference are less than a first preset threshold. The first total output power difference is a difference in total output power among the line optical amplifier and the optical power amplifier after adjustment; the second total output power difference is a difference in total output power among the optical preamplifier and the optical power amplifier after adjustment.

Exemplarily, the multiband optical signals transmitted by the multiband optical transmission system include a first band optical signal, a second band optical signal, and a third-band optical signal.

Exemplarily, the processor 1001 can invoke a computer program stored in memory 1005 and further perform the following operations: controlling the optical power amplifier to increase a first output power of the first band optical signal and decrease a second output power of the second band optical signal; and controlling the optical power amplifier to adjust a third output power of the third band optical signal according to an adjustment amount of the first output power and an adjustment amount of the second output power.

Exemplarily, the processor 1001 can invoke a computer program stored in memory 1005 and further perform the following operations: continuously monitoring a total output power of the optical power amplifier for the multiband optical signal during a process of controlling the optical power amplifier to adjust the inter-band power; in response to that the total output power of the optical power amplifier for the multiband optical signal is constant, monitoring power differences among the first output power, the second output power, and the third output power; and in response to that the power difference is less than a second preset threshold, determining that the output power among each band meets a second preset condition.

Exemplarily, the processor 1001 can invoke a computer program stored in memory 1005 and further perform the following operations: determining a band slope adjustment amount for each band according to a channel-level output power spectrum of the optical preamplifier at an end of the optical signal transmission multiplexing section; and controlling the optical power amplifier, the line optical amplifier, and the optical preamplifier to respectively adjust the power slope within each band according to each band slope adjustment amount.

Exemplarily, the processor 1001 can invoke a computer program stored in memory 1005 and further perform the following operations: measuring a channel-level output power spectrum of the optical preamplifier at the end of the optical signal transmission multiplexing section using an optical performance monitor; determining a band slope of each band of an optical signal by fitting the channel-level output power spectrum; and calculating the band slope adjustment amount for each band respectively according to each band slope.

Exemplarily, the processor 1001 can invoke a computer program stored in memory 1005 and further perform the following operations: determining a slope adjustment ratio of each of the optical power amplifier, the line optical amplifier, and the optical preamplifier using the band slope adjustment amount; and controlling the optical power amplifier, the line optical amplifier, and the optical preamplifier to respectively adjust the power slope within each band according to their respective slope adjustment ratios.

Exemplarily, the processor 1001 can invoke a computer program stored in memory 1005, after performing the controlling the optical power amplifier, the line optical amplifier, and the optical preamplifier to respectively adjust the power slope within each band according to each band slope adjustment amount, further perform the following operations: in response to that a third preset condition is not met, iteratively executing operations of the controlling the optical power amplifier to adjust the power among each band and the controlling the optical power amplifier, the line optical amplifier, and the optical preamplifier to adjust a power slope within each band; the third preset condition is that the output power adjustment amount among each band is less than a third preset threshold, and the band slope adjustment amount for each band is less than a fourth preset threshold.

Exemplarily, in response to meeting the third preset condition, the processor 1001 can invoke a computer program stored in memory 1005 and further perform the following operations: determining a target output power spectrum according to an actual output power spectrum of the optical signal transmission multiplexing section, and determining a channel-level power equalization amount of the optical signal transmission multiplexing section; determining maximum nonlinear cost of the multiband optical transmission system according to the channel-level power equalization amount; determining and outputting an optical signal input fiber power of the multiband optical transmission system in response to the maximum nonlinear cost meeting a preset nonlinear effect condition.

Exemplarily, in response to meeting the third preset condition, the processor 1001 can invoke a computer program stored in memory 1005, after performing the determining maximum nonlinear cost of the multiband optical transmission system according to the channel-level power equalization amount, further performs the following operations: in response to that the maximum nonlinear cost does not meet the nonlinear effect condition, iteratively executing that controlling multiple power adjustment points to perform joint adjustment operations of intra-band power and inter-band power until the maximum nonlinear cost meets the nonlinear effect condition.

Exemplarily, the preset nonlinear effect condition includes: a value of the maximum nonlinear cost is less than a fifth preset threshold, a value of a filtering cost for optical signal transmission is less than a sixth preset threshold, and net margins of optical signal-to-noise ratio for a worst wave in each band are equal and is greater than or equal to a seventh preset threshold.

Based on the hardware operating environment and device structure of the embodiments of the present application described above, the overall concept of a control method for a multiband optical transmission system provided by the embodiments of the present application is first proposed.

In the field of optical communication, the Stimulated Raman Scattering (SRS) effect is a key factor affecting the performance of a broadband multiband optical transmission system. Because the SRS effect causes power shift from short wavelengths to long wavelengths and power unevenness in the Raman gain spectrum up to about 100 nm, the entire broadband multiband optical transmission system cannot support long-distance transmission of optical signals. Furthermore, in some cases, multiband optical transmission systems exhibit significant nonlinear costs when transmitting high-power optical signals, and the nonlinear effect of optical transmission systems is also an important factor limiting the transmission distance of the system.

To address the aforementioned issues, the present application proposes a control method for a multiband optical transmission system, by determining multiple power adjustment points in the optical signal transmission multiplexing section of the multiband optical transmission system; and then controlling the multiple power adjustment points to jointly adjust an intra-band power and an inter-band power to cause an optical transmission power of the multiband optical transmission system to be in a balanced state. That is, by jointly adjusting the power and power slope within bands and among bands, the SRS effect is balanced in sequence to ensure the power of the optical receiver and the flatness of the optical signal-to-noise ratio (OSNR), thereby avoiding the power unevenness caused by the SRS effect and avoiding the nonlinear cost of exceeding the limit in the optical transmission system, thus realizing reliable transmission of multi-band broadband long-distance optical transmission systems.

Based on the overall concept of the control method for the multiband optical transmission system provided in the above-described embodiments of the present application, various embodiments of the control method for the multiband optical transmission system of the present application are proposed.

The control method for the multiband optical transmission system of the present application is applied to the aforementioned operation device; the operation device can be a communication device integrated into the multiband optical transmission system or a communication device connected to the multiband optical transmission system. It should be understood that, based on different design needs in practical applications, the control method for the multiband optical transmission system of the present application can also be applied to other terminal devices in different feasible embodiments. However, for ease of understanding and explanation of the technical solution, the following description uses a communication device as the implementing entity to illustrate the control method for the multiband optical transmission system.

Referring to FIG. 2, which is a flowchart illustrating the steps of the first embodiment of the control method for the multiband optical transmission system of the present application. Although the logical order is shown in the flowchart, in some cases, the control method for the multiband optical transmission system of the present application may, certainly, perform the steps shown or described in a different order than that shown here.

As shown in FIG. 2, in the first embodiment of the control method for the multiband optical transmission system of the present application, the control method for the multiband optical transmission system provided by the present application may include the following steps.

Step S10, determining multiple power adjustment points in the optical signal transmission multiplexing section of the multiband optical transmission system.

In this embodiment, during long-distance transmission of multiband optical signals, the communication device determines multiple power adjustment points in the optical signal transmission multiplexing section of the multiband optical transmission system.

In this embodiment and other feasible embodiments, the multiband optical transmission system can be an S+C+L optical transmission system for long-distance transmission of optical signals including S band, C band, and L band. Specifically, this S+C+L optical transmission system can be a long-distance 800G × 80λ system applied to next-generation OTN (optical transport network) networks. Furthermore, it should be understood that, based on different design requirements for practical applications, this multiband optical transmission system can, certainly, also be other systems for transmitting optical signals containing multiple bands.

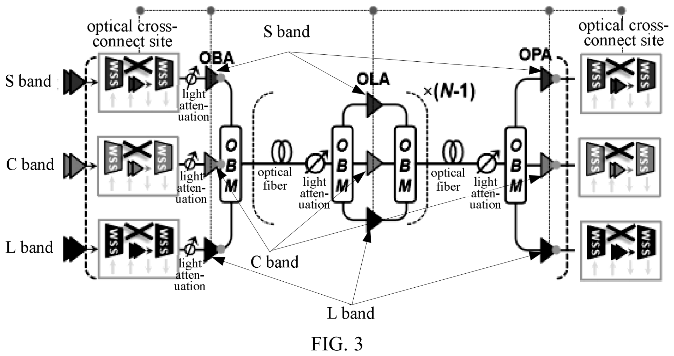

Exemplarily, assuming the aforementioned multiband optical transmission system is a high-capacity transmission system using a high-spectral-efficiency 800G 85GBd PCS-64QAM modulation scheme and configured with a grid of 87.5GHz-the C6T+L6T+S6T optical transmission system. The single-fiber capacity of this C6T+L6T+S6T optical transmission system can support 800 × 204λ = 163.2 Tbit/s. As shown in FIG. 3, when the communication device controls this C6T+L6T+S6T optical transmission system for long-distance transmission of optical signals including S band, C band, and L band, the optical power amplifier OBA, line optical amplifier OLA, and optical preamplifier OPA in each optical signal transmission multiplexing section of the C6T+L6T+S6T optical transmission system can all be identified as power adjustment points requiring band-level power adjustment.

Step S20: controlling the multiple power adjustment points to jointly adjust an intra-band power and an inter-band power to cause an optical transmission power of the multiband optical transmission system to be in a balanced state.

In this embodiment, after the communication device determines multiple power adjustment points from the optical signal transmission multiplexing section of the multiband optical transmission system, by controlling multiple power adjustment points to perform the band-level power joint adjustment for both the intra-band power and the inter-band power, so that the optical transmission power of the multiband optical transmission system remains balanced throughout the transmission of multi-band optical signals.

Exemplarily, as shown in FIG. 3, in the long-distance transmission of optical signals including S band, C band and L band in the C6T+L6T+S6T optical transmission system, the wavelength division multiplexed signals of the S, C and L bands are configured with channel attenuation and grid for each service at the optical cross-connect station; the dummy light, after being routed at the optical crossover point to achieve full coverage of the entire wavelength band, the optical signal enters the optical signal transmission multiplexing section after undergoing optical attenuation and power adjustment. At this point, the communication device controls the C6T+L6T+S6T optical transmission system, where the optical signal transmission multiplexing section OBM amplifies the signal. The signal is then combined by the optical band multiplexer OBM before entering the fiber optic link for transmission. The optical attenuation after the fiber is used to adjust the span loss. The optical signal then passes through the OBM again, separating the S, C, and L bands. Each band's service optical signal is amplified by the line optical amplifier OLA, and then combined again by the OBM. Thus, the optical signal cycles through N-1 optical signal transmission multiplexing section spans, then passes through the last fiber optic span before being split by the optical band multiplexer OBM and amplified by the optical preamplifier OPA at the receiving end. Ultimately, the optical signal transmission multiplexing section transmits signals to multiple optical cross-connect stations, which determine the direction of the S, C, and L band optical signals. A dummy light of the occupant wavelength is also de-circuited/blocked at this optical cross-connect station.

In this embodiment, the control method for the multiband optical transmission system of the present application determines multiple power adjustment points in the optical signal transmission multiplexing section of the multiband optical transmission system; and then controls the multiple power adjustment points to jointly adjust an intra-band power and an inter-band power to cause an optical transmission power of the multiband optical transmission system to be in a balanced state. That is, by jointly adjusting the power and power slope within and among bands, the SRS effect is balanced sequentially to ensure the flatness of the power and optical signal-to-noise ratio (OSNR) at the optical receiver, thereby avoiding the power unevenness caused by the SRS effect and avoiding the nonlinear cost of exceeding limits in the optical transmission system, achieving reliable multiband broadband long-distance transmission of the optical transmission system.

In some feasible embodiments of the control method for the multiband optical transmission system of the present application, the power adjustment points include an optical power amplifier OBA, a line optical amplifier OLA, and an optical preamplifier OPA. Based on this, the aforementioned operation of " controlling the multiple power adjustment points to jointly adjust an intra-band power and an inter-band power" can includes: controlling the line optical amplifier and the optical preamplifier to adjust until an total output power of the line optical amplifier, the optical preamplifier, and the optical power amplifier within each band meets a first preset condition; after the total output power meets the first preset condition, controlling the optical power amplifier to adjust the power among each band to cause an output power among each band meets a second preset condition; and after adjusting the power among each band, controlling the optical power amplifier, the line optical amplifier, and the optical preamplifier to adjust a power slope within each band.

In this embodiment, in the process of controlling the optical power amplifier OBA, line optical amplifier OLA, and optical preamplifier OPA in each optical signal transmission multiplexing section of a multiband optical transmission system to jointly adjust the intra-band power and inter-band power, the communication device can first control the line optical amplifier OLA and the optical preamplifier OPA to perform power adjustment until the total output power of the line optical amplifier OLA and the optical preamplifier OPA and the optical power amplifier OBA for each band of the optical signal meets the first preset condition.

Subsequently, in the case that the total output power of the line optical amplifier OLA and the optical preamplifier OPA and the optical power amplifier OBA for each band of the optical signal meets the first preset condition, the communication device can further control the optical power amplifier OBA to perform power adjustment operations among each bands of the optical signal, and iteratively control the optical power amplifier OBA to adjust the power of each band of the optical signal until the output power of each band of the optical signal meets the second preset condition.

Furthermore, after controlling the optical power amplifier OBA to perform power adjustment operations among each bands of the optical signal, the communication device can also synchronously or asynchronously control the optical power amplifier OBA, along with the aforementioned line optical amplifier OLA and the optical preamplifier OPA, to adjust the power slope of the optical signal in each band. Thus, the communication device controls the optical power amplifier OBA, line optical amplifier OLA, and optical preamplifier OPA in the optical signal transmission multiplexing section to jointly adjust the intra-band power and inter-band power, thereby maintaining a balanced optical transmission power throughout the multiband optical transmission system.

In some feasible embodiments of the control method for the multiband optical transmission system of the present application, the control method for the multiband optical transmission system may further include:
in response to that the total output power does not meet the first preset condition, iteratively executing an operation of the controlling the line optical amplifier and the optical preamplifier to adjust.

In this embodiment, during the process of controlling the line optical amplifier OLA and the optical preamplifier OPA to perform power adjustment, the communication device continuously monitors the total output power of each of the line optical amplifier OLA and the optical preamplifier OPA and the optical power amplifier OBA for each band of the optical signal, and determines whether the total output power meets the aforementioned first preset condition. In this way, after the communication device controls the line optical amplifier OLA and the optical preamplifier OPA to perform power adjustment each time, if it is determined that the total output power still does not meet the first preset condition, then the line optical amplifier OLA and the optical preamplifier OPA will continue to be iteratively controlled to adjust their power. In this way, the process of adjusting the power of the line optical amplifier OLA and the optical preamplifier OPA is repeated until the total output power meets the first preset condition.

In some feasible embodiments of the control method for the multiband optical transmission system of the present application, the aforementioned first preset condition can be: the total output power difference among the line optical amplifier and the optical power amplifier after power adjustment is less than a first preset threshold; or, the total output power difference among the optical preamplifier and the optical power amplifier after power adjustment is less than a first preset threshold. Specifically, the first preset threshold can be 0.1 dB. However, it should be understood that, based on different design needs in practical applications, the specific value of the first preset threshold can naturally be other values in different feasible embodiments. That is, the control method for the multiband optical transmission system of the present application does not limit the specific value of the first preset threshold.

Based on this, the control method for the multiband optical transmission system of the present application may further include: determining that the total output power meets the first preset condition in response to that a first total output power difference and a second total output power difference are less than a first preset threshold.

In this embodiment, the first total output power difference is a difference in total output power among the line optical amplifier and the optical power amplifier after performing power adjustment; the second total output power difference is a difference in total output power among the optical preamplifier and the optical power amplifier after performing power adjustment.

In this embodiment, during the process of controlling the line optical amplifier OLA and the optical preamplifier OPA to perform power adjustment, the communication device continuously monitors the total output power of each of the line optical amplifier OLA and the optical preamplifier OPA relative to the optical power amplifier OBA for each band of the optical signal, thereby calculating and determining the total output power difference among the line optical amplifier and the optical power amplifier after performing power adjustment, that is, the first total output power difference; and/or, calculating and determining the total output power difference among the line optical amplifier and the optical power amplifier after performing power adjustment, that is, the second total output power difference.

Subsequently, the communication device compares the difference among the first total output power OAP and/or the difference among the second total output power OAP and the aforementioned first preset threshold, thus, only when the first total output power difference and/or the second total output power difference are less than the first preset threshold, determining that the total output power of the line optical amplifier OLA and/or the optical preamplifier OPA and the optical power amplifier OBA for each band of the optical signal meets the first preset condition. Conversely, in the case that the first total output power difference and/or the second total output power difference are greater than or equal to the first preset threshold, the communication device determines that the total output power does not meet the first preset condition.

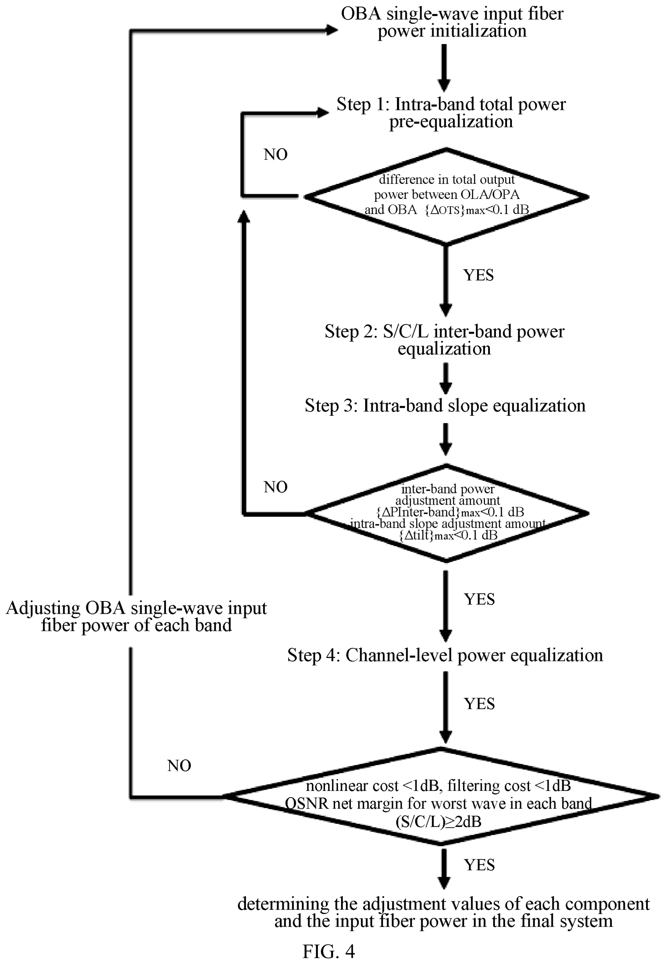

Exemplarily, as shown in FIG. 4, in the process of controlling the optical power amplifier OBA, line optical amplifier OLA, and optical preamplifier OPA in each optical signal transmission multiplexing section of the multiband optical transmission system to jointly adjust the intra-band power and inter-band power, the communication device first initializes the single-wavelength fiber input power of the three optical signals S, C, and L bands in the optical power amplifier OBA to be $p_{OBA}^{S}$, $p_{OBA}^{C}$ and $p_{OBA}^{L}$, respectively. Subsequently, the communication device controls the line optical amplifier OLA and the optical preamplifier OPA to perform intra-band power adjustment to pre-equalize the total power within the band. That is, the communication device adjusts the gains of the line optical amplifier OLA and the optical preamplifier OPA to ensure that the total output power of each amplifier is equal to the total output power of the optical power amplifier OBA, that is:

$$P_{OLA\_out,i}^{S} = pow2db\left(\sum_{j=1}^{j=Num\_S} db2pow(p_{OBA\_out}^{S,j})\right)(i=1,2,3...N), \quad P_{OPA\_out}^{S} = pow2db\left(\sum_{j=1}^{j=Num\_S} db2pow(p_{OBA\_out}^{S,j})\right)(i=1,2,3...N)$$

$$P_{OLA\_out,i}^{C} = pow2db\left(\sum_{j=1}^{j=Num\_C} db2pow(p_{OBA\_out}^{C,j})\right)(i=1,2,3...N), \quad P_{OPA\_out}^{S} = pow2db\left(\sum_{j=1}^{j=Num\_C} db2pow(p_{OBA\_out}^{C,j})\right)(i=1,2,3...N)$$

$$P_{OLA\_out,i}^{L} = pow2db\left(\sum_{j=1}^{j=Num\_L} db2pow(p_{OBA\_out}^{L,j})\right)(i=1,2,3...N), \quad P_{OPA\_out}^{L} = pow2db\left(\sum_{j=1}^{j=Num\_L} db2pow(p_{OBA\_out}^{L,j})\right)(i=1,2,3...N)$$

Where N represents the number of fiber optic spans contained within a single optical signal transmission multiplexing section; Num_S, Num_C, and Num_L are the total number of wavelengths in the S, C, and L bands of the optical signal, respectively.

Furthermore, during the process of controlling the line optical amplifier OLA and the optical preamplifier OPA to adjust the intra-band power and pre-equalize the total power within the band, the communication device further simultaneously records the total output power difference among the line optical amplifier OLA and/or the optical preamplifier OPA and the optical power amplifier OBA in each optical fiber span within each signal transmission multiplexing segment as ΔOTS; determines that the total output power of the line optical amplifier OLA and/or the optical preamplifier OPA and the optical power amplifier OBA for each band of the optical signal meets the first preset condition when the maximum value of ΔOTS is less than the first preset threshold of 0.1 dB, so that it can perform the next step of controlling the optical power amplifier OBA to adjust the power among the S, C, and L bands of the optical signal. Otherwise, the communication device will cyclically control the line optical amplifier OLA and the optical preamplifier OPA to perform intra-band power adjustment.

In some feasible embodiments of the control method for the multiband optical transmission system of the present application, the multiband optical signal transmitted by the multiband optical transmission system includes: a first band optical signal (that is, an S band optical signal); a second band optical signal (that is, an L band optical signal); and a third band optical signal (that is, a C band optical signal). Based on this, the aforementioned "controlling the optical power amplifier to adjust the inter-band power" can include: controlling the optical power amplifier to increase a first output power of the first band optical signal and decrease a second output power of the second band optical signal; and controlling the optical power amplifier to adjust a third output power of the third band optical signal according to an adjustment amount of the first output power and an adjustment amount of the second output power.

In this embodiment, when the communication device controls the optical power amplifier OBA to adjust the output power among each band of the optical signal, it can control the optical power amplifier OBA to increase the first output power (S band optical signal) of the first band optical signal and simultaneously decrease the second output power (L band optical signal) of the second band optical signal. Furthermore, the communication device also simultaneously controls the optical power amplifier OBA to adjust the third output power (C band optical signal) of the third band optical signal based on the adjustment amounts of the first second output power and the second output power, thereby keeping the total output power of the optical power amplifier OBA constant across each band of the optical signal.

In this embodiment, when a communication device controls an optical power amplifier OBA to adjust the output power of the optical signal across each band to achieve inter-band power balance, in order to ensure convergence of the power adjustment strategy, it is necessary to control that the total input power of the multiband optical signal remains unchanged before and after the optical power amplifier OBA performs power adjustment. In this way, in the case that the multiband optical signal includes the first band optical signal (that is, S band optical signal), the second band optical signal (that is, L band optical signal) and the third band optical signal (that is, C band optical signal), the communication device can simultaneously control the optical power amplifier OBA to increase the output power of the S band and decrease the output power of the L band, while the adjustment amount of the C band needs to be coordinated with the adjustment amounts of the output power of the S band and L band to ensure that the total output power of the optical power amplifier OBA for the optical signal remains constant. Since the power remains constant because the C band has a relatively small impact on the overall system, the adjustment amount of the C band is used in conjunction with that of the S+L band.

Furthermore, in some other feasible embodiments of the control method for the multiband optical transmission system of the present application, the communication device can also control the optical power amplifier to perform power equalization among the various bands of the multiband optical information, while simultaneously adjusting the output power of the first band optical signal (that is, S band optical signal), the second band optical signal (that is, L band optical signal) and the third band optical signal (that is, C band optical signal), and the goal is simply to minimize the difference in inter-band power among the three bands. Based on this, the control method for the multiband optical transmission system of the present application may further include: continuously monitoring a total output power of the optical power amplifier for the multiband optical signal during a process of controlling the optical power amplifier to adjust the inter-band power; in response to that the total output power of the optical power amplifier for the multiband optical signal is constant, monitoring power differences among the first output power, the second output power, and the third output power; and in response to that the power difference is less than a second preset threshold, determining that the output power among each band meets a second preset condition.

In this embodiment, when controlling the optical power amplifier OBA to adjust the output power among each band of the optical signal, the communication device can also continuously monitor the total output power of the optical power amplifier OBA for transmitting each band of the multiband optical signal. Thus, in the case that the optical power amplifier OBA keeps the total output power of constant, continuously monitoring the power difference among each pair of the three output powers (the first output power of the first band optical signal (that is, S band optical signal), the second output power of the second band optical signal (that is, L band optical signal), and the third output power of the third band optical signal (that is, C band optical signal)), and further detecting whether the maximum difference among these power differences is less than a second preset threshold. In this way, in the case that the maximum difference is less than the second preset threshold and thereby determining each power differences is less than the second preset threshold, the communication device determines that after the optical power amplifier OBA adjusts the output power among each band of the optical signal, the output power among each band meets the second preset condition.

In this embodiment, the second preset threshold can also be 0.1 dB. It should be understood that, based on different design needs in practical applications, the specific value of the second preset threshold can naturally be other values in different feasible embodiments, such as 0.2 dB, 0.3 dB, or 0.5 dB, etc. That is, the control method for the multiband optical transmission system of the present application does not limit the specific value of the second preset threshold.

Exemplarily, as shown in FIG. 4, when the communication device controls the optical power amplifier OBA to adjust the output power among the three bands S, L, and C of the optical signal, it can specifically calculate the total power difference among the S band and the C band in the entire optical signal transmission multiplexing section, and allocate the adjustment amount for both the S band and the C band according to the strategy of assigning κ and (1-κ) respectively before and after a single span. Thus, when κ is 1/2, the adjustment amount $\Delta P_S$ of the S band can be expressed as:

$$\begin{cases} \Delta P_{out}^{C\&S} = \sum_{i=1}^{N} \left( P_{OBA/OLA\_out,i}^{C} - P_{OBA/OLA\_out,i}^{S} \right) \\ \Delta P_{in}^{C\&S} = \sum_{i=1}^{N} \left( P_{OLA/OPA\_in,i}^{C} - P_{OLA/OPA\_in,i}^{S} \right) \\ \Delta P_S = (\Delta P_{out}^{C\&S} + \Delta P_{in}^{C\&S})/N/\kappa \end{cases}$$

Where $P_{OBA/OLA\_out,i}^{C}$ and $P_{OBA/OLA\_out,i}^{S}$ represent the total output power of the optical power amplifier OBA and the total output power of the line optical amplifier OLA in the i-th optical fiber span in C band and S band, respectively; while $P_{OBA/OLA\_in,i}^{C}$ and $P_{OBA/OLA\_in,i}^{S}$ represent the total input power of the optical power amplifier OBA and the total input power of the line optical amplifier OLA in the i-th optical fiber span in C band and S band, respectively.

Then, the communication device calculates the total power difference among the L band and C band in the entire optical signal transmission multiplexing section, and allocates adjustment amounts for both the L band and C band according to the strategy of assigning κ and (1-κ) respectively before and after a single span. Therefore, when κ is also taken as 1/2, the adjustment amount $\Delta P_L$ of the L band can be expressed as:

$$\begin{cases} \Delta P_{out}^{C\&L} = \sum_{i=1}^{N} \left( P_{OBA/OLA\_out,i}^{C} - P_{OBA/OLA\_out,i}^{L} \right) \\ \Delta P_{in}^{C\&L} = \sum_{i=1}^{N} \left( P_{OLA/OPA\_in,i}^{C} - P_{OLA/OPA\_in,i}^{L} \right) \\ \Delta P_L = (\Delta P_{out}^{C\&L} + \Delta P_{in}^{C\&L})/N/\kappa \end{cases}$$

Where, $P_{OBA/OLA\_in,i}^{L}$ and $P_{OBA/OLA\_out,i}^{L}$ represent the total input power of the optical power amplifier OBA and the total input power of the line optical amplifier OLA in the i-th optical fiber span of the L band, respectively, and, representing the total output power of the optical power amplifier OBA and the total output power of the line optical amplifier OLA in the i-th optical fiber span of the L band..

Furthermore, in order to ensure that the total input power of the multiband optical signal remains constant before and after power adjustment of the optical power amplifier OBA, the communication device also needs to solve for the correction amount δi for each span of the S/C/L bands using the following formula:

$$db2pow(P^S_{OBA/OLA\_out,i}) + db2pow(P^C_{OBA/OLA\_out,i}) + db2pow(P^L_{OBA/OLA\_out,i})$$
$$= db2pow(P^S_{OBA/OLA\_out,i} + \Delta P_S + \delta_i/3)$$
$$+ db2pow(P^C_{OBA/OLA\_out,i} + \delta_i/3)$$
$$+ db2pow(P^L_{OBA/OLA\_out,i} + \Delta P_L + \delta_i/3)$$

Where db2pow and pow2db represent the conversion from dB to linear mW unit and the conversion from linear mW unit to dB unit, respectively.

Therefore, the adjustment amount ΔPInter-band required for each band of S span, C span, and L span is $\Delta PS + \delta_i/3$, $\Delta PC + \delta_i/3$, and $\Delta PL + \delta_i/3$, respectively. Thus, the communication device can control the optical power amplifier OBA to adjust the output power of the C band optical signal according to $\Delta PC + \delta_i/3$ in the adjustment amount APInter-band.

In some feasible embodiments of the control method for the multiband optical transmission system of the present application, the aforementioned "controlling the optical power amplifier, the line optical amplifier, and the optical preamplifier to adjust a power slope within each band" may include: determining a band slope adjustment amount for each band according to a channel-level output power spectrum of the optical preamplifier at an end of the optical signal transmission multiplexing section; and controlling the optical power amplifier, the line optical amplifier, and the optical preamplifier to respectively adjust the power slope within each band according to each band slope adjustment amount.

In this embodiment, when the communication device controls the optical power amplifier OBA, along with the line optical amplifier OLA and the optical preamplifier OPA, to adjust the power slope of optical signals in each band, first calculating and determining the band slope adjustment amount for each band of the optical signal according to the channel-level output power spectrum of the optical preamplifier OPA located at the end of the optical signal transmission multiplexing section; then controlling the optical power amplifier OBA, the line optical amplifier OLA, and the optical preamplifier OPA to perform power slope adjustment operations in each band separately according to the determined band slope adjustment amounts.

In some feasible embodiments of the control method for the multiband optical transmission system of the present application, the aforementioned "determining a band slope adjustment amount for each band according to a channel-level output power spectrum of the optical preamplifier at an end of the optical signal transmission multiplexing section" may include: measuring a channel-level output power spectrum of the optical preamplifier at the end of the optical signal transmission multiplexing section using an optical performance monitor; determining a band slope of each band of an optical signal by fitting the channel-level output power spectrum; and calculating the band slope adjustment amount for each band respectively according to each band slope.

In this embodiment, the communication device measures the channel-level output power spectrum of the optical preamplifier OPA located at the end of the optical signal transmission multiplexing section using optical performance monitors OPMs deployed at the beginning and end of the optical signal transmission multiplexing section, then fits the channel-level output power spectrum to determine each band slopes of each of the S band, L band, and C band of the optical signal, thereby further calculating and determining the band slope adjustment amount for each of the S, L, and C bands in the optical signal according to the each band slopes of each of the S band, L band, and C band.

Exemplarily, assuming a communication device measures the channel-level output power spectrum of the optical preamplifier OPA located at the end of the optical signal transmission multiplexing section using an optical performance monitor OPM, and the fitted output power slopes of the S/C/L bands at the end of the optical signal transmission multiplexing section are TS, TC, and TL respectively, then the communication device can further calculate and determine the band slope adjustment amount ΔPtilt for each of the S/C/L bands as follows: $-T_S \times (\gamma{:}1{:}1{:}...{:}1{-}\gamma)$, $-T_C \times (\gamma{:}1{:}1{:}...{:}1{-}\gamma)$, $-T_L \times (\gamma{:}1{:}1{:}...{:}1{-}\gamma)$.

In some feasible embodiments of the control method for the multiband optical transmission system of the present application, the aforementioned "controlling the optical power amplifier, the line optical amplifier, and the optical preamplifier to respectively adjust the power slope within each band according to each band slope adjustment amount" may include: determining a slope adjustment ratio of each of the optical power amplifier, the line optical amplifier, and the optical preamplifier using the band slope adjustment amount; and controlling the optical power amplifier, the line optical amplifier, and the optical preamplifier to respectively adjust the power slope within each band according to their respective slope adjustment ratios.

In this embodiment, after determining the band slope adjustment amount for each of the S, L, and C bands in the optical signal by the aforementioned calculations, the communication device can respectively determine the slope adjustment ratio for each of the optical power amplifier OBA, line optical amplifier OLA, and optical preamplifier OPA based on these band slope adjustment amounts. Therefore, the communication device can control the optical power amplifier OBA, line optical amplifier OLA, and optical preamplifier OPA to adjust the intra-band power slope of the S, L, and C bands according to their respective slope adjustment ratios.

Exemplarily, taking the power amplifier OBA and the optical preamplifier OPA as examples, after assuming that the communication device calculates and determines each band slope adjustment amount $\Delta$Ptilt for each of the S band, L band, and C band of the optical signal as: $-T_S \times (\gamma:1:1:...:1-\gamma)$, $-T_C \times (\gamma:1:1:...:1-\gamma)$, $-T_L \times (\gamma:1:1:...:1-\gamma)$ respectively, then the communication device can further determine that $\gamma$ in each band slope adjustment amount $\Delta$Ptilt is the slope adjustment ratio allocated to the optical power amplifier OBA, and 1-y in $\Delta$Ptilt is the slope adjustment ratio allocated to the optical preamplifier OPA. In this way, the communication device can control the optical power amplifier OBA to adjust the intra-band power slope of the S, L, and C bands according to the slope adjustment ratio y, and synchronously or asynchronously control the slope adjustment ratio 1-y of the optical preamplifier OPA to adjust the intra-band power slope of the S, L, and C bands.

Specifically, the value of $\gamma$ can be 1/2. However, it should be understood that, based on different design requirements for practical applications, the value of $\gamma$ can certainly be other values in different feasible embodiments. That is, the control method for the multiband optical transmission system of the present application does not specifically limit the value of $\gamma$.

In some feasible embodiments of the control method for the multiband optical transmission system of the present application, after the communication device performs the aforementioned "controlling the optical power amplifier, the line optical amplifier, and the optical preamplifier to respectively adjust the power slope within each band according to each band slope adjustment amount", the control method for the multiband optical transmission system of the present application may further include:

in response to that a third preset condition is not met, iteratively executing operations of the controlling the optical power amplifier to adjust the power among each band and the controlling the optical power amplifier, the line optical amplifier, and the optical preamplifier to adjust a power slope within each band; the third preset condition is that the output power adjustment amount among each band is less than a third preset threshold, and the band slope adjustment amount for each band is less than a fourth preset threshold.

In this embodiment, during the process of controlling the optical power amplifier OBA to adjust the output power among each band of the multiband optical signal, and during the process of controlling the optical power amplifier OBA, line optical amplifier OLA, and optical preamplifier OPA to adjust the power slope of each band of the multiband optical signal, the communication device continuously monitors whether the output power adjustment amount $\Delta$ PInter-band among each band of the multiband optical signal after the power adjustment by the optical power amplifier OBA is less than a third preset threshold, and monitors whether the band slope adjustment amount $\Delta$Ptilt, which controls the optical power amplifier OBA, line optical amplifier OLA, and optical preamplifier OPA to adjust the power slope of each band of the multiband optical signal, is less than a fourth preset threshold. In this way, if monitoring that the output power adjustment amount $\Delta$PInter-band among each band is less than the third preset threshold and the band slope adjustment amount $\Delta$Ptilt of each band is less than the fourth preset threshold, then determining that the power adjustment jointly performed by the optical power amplifier OBA, line optical amplifier OLA, and optical preamplifier OPA meets the third preset condition.

Conversely, if the communication device monitors that the output power adjustment amount $\Delta$PInter-band among each band is not less than the third preset threshold, or the band slope adjustment amount $\Delta$Ptilt of each band is not less than the fourth preset threshold, then determining that the current jointly performed power adjustment does not meet the third preset condition. Furthermore, the communication device iterates through the aforementioned operations of "controlling the optical power amplifier to adjust the power among each band" and "controlling the optical power amplifier, the line optical amplifier, and the optical preamplifier to adjust a power slope within each band", cycling in this way until monitoring and determining that the currently jointly performed power adjustment meets the third preset condition.

In this embodiment, both the third preset threshold and the fourth preset threshold can be 0.1 dB. Similarly, it should be understood that, based on different design needs of practical applications, the specific values of the third preset threshold and the fourth threshold can certainly be other values in different feasible embodiments. That is, the control method for the multiband optical transmission system of the present application does not limit the specific values of the third preset threshold and the fourth threshold.

In some feasible embodiments of the control method for the multiband optical transmission system of the present application, in the case that the communication device monitors and determines that the currently jointly performed power adjustment meets the third preset condition, the control method for the multiband optical transmission system may further include: determining a target output power spectrum according to an actual output power spectrum of the optical signal transmission multiplexing section, and determining a channel-level power equalization amount of the optical signal transmission multiplexing section; determining maximum nonlinear cost of the multiband optical transmission system according to the channel-level power equalization amount; determining and outputting an optical signal input fiber power of the multiband optical transmission system in response to the maximum nonlinear cost meeting a preset nonlinear effect condition.

In this embodiment, when the communication device monitors that the output power adjustment amount among each band of the multiband optical signal is less than the third preset threshold and the band slope adjustment amount of each band is less than the aforementioned fourth preset threshold, and thus determines that the power adjustment jointly performed by the optical power amplifier OBA, line optical amplifier OLA, and optical preamplifier OPA meets the third preset condition, the communication device determines the target output power spectrum based on the actual output power spectrum of the optical signal transmission multiplexing section after the power joint adjustment. Furthermore, the communication device also determines the channel-level power equalization amount of the optical signal transmission multiplexing section, and determines the maximum nonlinear cost of the currently controlled multiband optical transmission system based on this channel-level power equalization amount; thus, in the case that the maximum nonlinear cost meets a preset nonlinear effect condition, determining and outputting the optical signal input fiber power of the multiband optical transmission system.

In this embodiment, the aforementioned the preset nonlinear effect condition includes: a value of the maximum nonlinear cost is less than a fifth preset threshold, a value of a filtering cost for optical signal transmission is less than a sixth preset threshold, and net margins of optical signal-to-noise ratio for a worst wave in each band are equal and is greater than or equal to a seventh preset threshold. The fifth preset threshold and the sixth preset threshold can both be the same, both taking a value of 0.1 dB, while the seventh preset threshold can specifically be 2 dB. It should be understood that, based on different design needs in practical applications, the specific value of the fifth preset threshold, the specific value of the sixth preset threshold, and the specific value of the seventh preset threshold can naturally be other values in different feasible embodiments. That is, the control method for the multiband optical transmission system of the present application does not limit the specific value of the fifth preset threshold, the specific value of the sixth preset threshold, and the specific value of the seventh preset threshold.

Exemplarily, as shown in FIG. 4, after the communication device controls the optical power amplifier OBA to adjust the output power of each band of the multiband optical signal, if the maximum value among the output power adjustment amounts ΔPInter-band configured to adjust the output power of each band is less than the third preset threshold of 0.1 dB, and after the communication device controls the optical power amplifier OBA, line optical amplifier, and optical preamplifier OPA to adjust the power slope within each band of the optical signal, the maximum value among the output power adjustment amounts ΔPtilt of each band is also less than the fourth preset threshold of 0.1 dB, it indicates that, at this point, the total inter-band power after controlling the optical power amplifier OBA, line optical amplifier, and optical preamplifier OPA to perform the power joint adjustment on the optical signal has been in a balanced state, and the intra-band slope has been evenly distributed to each span according to the span.

If determining that the maximum value of the output power adjustment amount ΔPInter-band is not less than the third preset threshold 0.1 dB, or the maximum value of the band slope adjustment amount ΔPtilt is not less than the fourth preset threshold 0.1 dB, then the communication device needs to return to the aforementioned operation of "controlling the line optical amplifier and the optical preamplifier to adjust" to continue with a new round of band-level power joint adjustment cycle in the optical signal transmission multiplexing section; otherwise, it will proceed to the next step of "channel-level power equalization".

During the communication device performs the "channel-level power equalization" operation, that is, monitoring the actual output power spectrum of the entire optical signal transmission multiplexing section using optical performance monitors OPMs deployed at the beginning and end of the optical signal transmission multiplexing section, and calculating and obtaining the target output power spectrum based on the slope of the fitted actual output power spectrum while ensuring that the total power of the optical signal transmission multiplexing section remains unchanged. Therefore, the communication device can obtain the channel-level power equalization amount (i.e., the channel-level attenuation ΔPOCH of the band selection switch WSS in the optical cross-section) by subtracting the aforementioned target output power spectrum from the actual output power and dividing by α ( α takes the value of 1/2, representing the proportion of system unevenness shared by the transmitting and receiving ends).

In some feasible embodiments of the control method for the multiband optical transmission system of the present application, the communication device can, specifically, after the input fiber power spectrum obtained after currently performing the power joint adjustment and optimization on the optical signal transmission multiplexing section, the channel-level power equalization amount, calculated and determined based on the aforementioned target output power spectrum and actual output power, is substituted into the enhanced Gaussian noise EGN model to evaluate the maximum nonlinear cost (typically located at a short wavelength in the S band in S+C+L optical signal transmission systems); and determined whether the aforementioned nonlinear effect condition is met based on the value of this maximum nonlinear cost.

Therefore, in the case that the communication device compares and finds that the value of the aforementioned maximum nonlinear cost is less than the fifth preset threshold of 0.1 dB, the value of the filtering cost for the optical signal transmission in the entire multiband optical signal transmission system evaluated and obtained similarly by using the enhanced Gaussian noise EGN model is less than the sixth preset threshold of 0.1 dB, and the net margins of optical signal-to-noise ratio for a worst wave in each band of S/L/C are equal and is greater than or equal to a seventh preset threshold of 2 dB, the communication device determines that after controlling the optical power amplifier OBA, line amplifier OLA, and optical preamplifier OPA in the current optical signal transmission multiplexing section to perform power joint adjustment, the maximum nonlinear cost of the entire optical signal transmission multiplexing section meets the nonlinear effect condition. That is, the input fiber power of the optical signal transmission multiplexing section after the current adjustment has made the overall performance of the multiband optical signal transmission system to reach its optimal level, thereby determining and outputting the adjustment amount and the optical signal input fiber power for each component in the entire system ultimately performing power adjustment.

In some other feasible embodiments of the control method for the multiband optical transmission system of the present application, after the aforementioned "determining maximum nonlinear cost of the multiband optical transmission system according to the channel-level power equalization amount", the control method for the multiband optical transmission system may further include: in response to that the maximum nonlinear cost does not meet the nonlinear effect condition, iteratively executing that controlling multiple power adjustment points to perform joint adjustment operations of intra-band power and inter-band power until the maximum nonlinear cost meets the nonlinear effect condition.

In this embodiment, after the communication device calculates and determines the maximum nonlinear cost of the currently controlled multiband optical transmission system by the aforementioned process, if detecting and determining that the maximum nonlinear cost still does not meet the aforementioned nonlinear effect condition, the communication device still needs to iteratively execute the aforementioned operation of "controlling the multiple power adjustment points to jointly adjust an intra-band power and an inter-band power" at this time, and after cycling in this way until the maximum nonlinear cost meets the nonlinear effect condition, determining and outputting the optical signal input fiber power of the multiband optical transmission system.

Exemplarily, as shown in FIG. 4, after the communication device calculates and determines the channel-level power equalization amount based on the aforementioned target output power spectrum and the actual output power, and then uses the channel-level power equalization amount to evaluate the maximum nonlinear cost in the enhanced Gaussian noise EGN model, if the communication device further compares and finds that the value of the maximum nonlinear cost is less than the fifth preset threshold of 0.1 dB, or the value of the filtering cost for the optical signal transmission in the entire multiband optical signal transmission system evaluated and obtained similarly by using the enhanced Gaussian noise EGN model is less than the sixth preset threshold of 0.1 dB, or the net margins of optical signal-to-noise ratio for a worst wave in each band of optical signal S/L/C are equal and is greater than or equal to a seventh preset threshold of 2 dB, then after the communication device determines to control the optical power amplifier OBA, line amplifier OLA, and optical preamplifier OPA in the current optical signal transmission multiplexing section to perform power joint adjustment, the maximum nonlinear cost of the entire optical signal transmission multiplexing section does not meet the nonlinear effect condition. In this way, the communication device determines that it currently need to further perform adjustment of the single wave input fiber power memory adjustment on the optical power amplifier OBA of each band of the optical signal, that is, re-entering the aforementioned iterative process of "controlling the multiple power adjustment points to jointly adjust an intra-band power and an inter-band power", and cycling in this way until determining that the maximum nonlinear cost of the entire optical signal transmission multiplexing section meets the nonlinear effect condition.

In this embodiment, the control method for the multiband optical transmission system of the present application determines the channel-level power equalization amount of the optical signal transmission multiplexing section by the communication device, so as to determine the maximum nonlinear cost of the multiband optical transmission system according to the channel-level power equalization amount, thereby determining and outputting the optical signal input fiber power of the multiband optical transmission system in the case that the maximum nonlinear cost meets a preset nonlinear effect condition; in the case that the maximum nonlinear cost does not meet the nonlinear effect condition, iteratively executing that controlling multiple power adjustment points to perform joint adjustment operations of intra-band power and inter-band power until the maximum nonlinear cost meets the nonlinear effect condition. In this way, the control method for the multiband optical transmission system of the present application can effectively limit the nonlinear cost of the S+C+L multiband optical signal during transmission, and make the maximum nonlinear cost conform to engineering standards by limiting the input fiber power distribution.

Furthermore, by evaluating the transmission OSNR and cost of the worst wave in each band and reasonably controlling the input fiber power distribution, the control method for the multiband optical transmission system of the present application can also effectively adjust the net OSNR margin of each band of the S+C+L multiband signal to meet engineering standards.

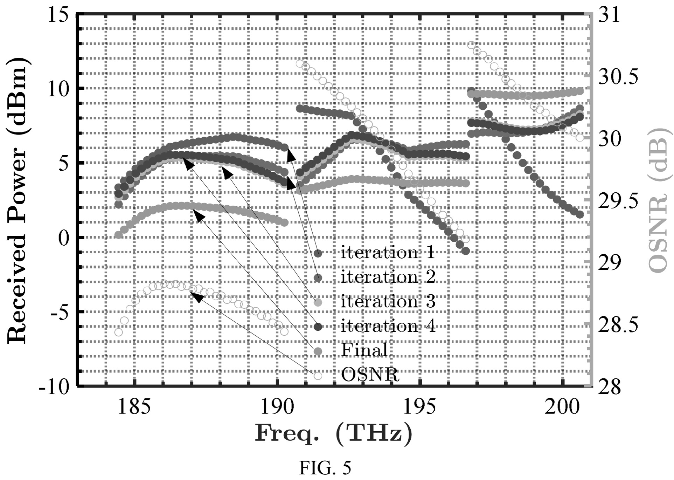

In a feasible embodiment of the control method for the multiband optical transmission system of the present application, assuming that the multiband optical signal transmission system controlled by the communication device is a first S+C+L band optical transmission system, and the first S+C+L band optical transmission system is specifically an 800G PCS-16QAM 183 GBd 80 band system with a grid configuration of 200GHz, the system operating band occupies a total of 16THz in S+C+L; in the multiband optical signal transmitted by the system, the S band occupies 4 THz (20 waves), the C band occupies 6 THz (30 waves), and the L band occupies 6 THz (30 waves). Taking the transmission environment as a single multiplexed segment with equal span length (a total of 5 spans, i.e., N=5, G.654E optical fiber), a single span length of 75km, and a span loss of 20dB/span. When the control method for the multiband optical transmission system described in the present application is applied to the first S+C+L band optical transmission system, the balancing effect of channel power and optical signal-to-noise ratio OSNR as shown in FIG. 5.

In this first S+C+L band optical transmission system, the modulation code pattern B2B OSNR tolerance is 20.5 dB, and it employs multi-electronic carrier multiplexing technology, consisting of 8 subcarriers within a 183 GBd spectral width. The average loss coefficients for the S/C/L bands in G.654 optical fiber is 0.182 dB, 0.171 dB, and 0.173 dB, respectively. Considering the OBM cascade structure, the insertion losses for the S/C/L bands is 1.4 dB, 1.2 dB, and 0.8 dB, respectively. The optical amplifier noise figure for the S/C/L bands is 8 dB, 5.5 dB, and 7 dB, respectively. Evaluation shows that the filtering impairment of this code pattern is very small and negligible under the current configuration.

When the communication device controls the optical power amplifier OBA, line optical amplifier OLA, and optical preamplifier OPA in a certain optical signal transmission multiplexing section of the first S+C+L band optical transmission system to jointly adjust the intra-band power and inter-band power, that is, the initial fiber input power of the optical power amplifier OBA for each single wave S/C/L band can be configured to be +6 dBm. As shown in FIG. 5, after four iterations in FIG. 4 (step 1 to step 3), the power flatness of the receiving end (connected to the output of the optical preamplifier OPA) can be seen to be continuously optimized. However, due to the limitation of nonlinear effects, it is necessary to update the initial fiber input power, and after updating the initial input fiber power, repeating step 1 to step 4 in FIG. 4 to finally obtain average single wave input fiber powers of 9.45 dB, 3.65 dB, and 1.79 dB for the S/C/L bands, respectively. At this point, it can be seen that the maximum OSNR flatness of the S/C/L bands is still less than 1 dB, and the power flatness is within 1.5 dB, achieving the expected results.

Performing engineering evaluation on the modulation format of the first S+C+L band optical transmission system at the maximum transmission distance in G.654 optical fiber under the S+C+L band by using a communication device, that is, controlling the net OSNR margin for the worst wave in the S/C/L bands to be equal and approximately equal to 2 dB, and the control system nonlinearity and filtering cost are less than 1 dB. The evaluation results show that in G.654E optical fiber, this modulation format supports transmission over 1200 km, the average single wave input fiber power of the S/C/L bands is 9.45 dB, 3.65 dB, and 1.79 dB, respectively; Raman additional losses of the S/C/L bands is 1.94 dB, -0.83 dB, and -2.79 dB, respectively; the OSNR unevenness of the S/C/L bands is 0.35 dB, 0.75 dB, and 0.25 dB, respectively; the maximum nonlinear cost of the S/C/L bands is 0.94 dB, 0.27 dB, and 0.01 dB, respectively. At this point, the OSNR net margin of the worst wave of the S/C/L bands is 2.1 dB, 2.1 dB, and 2.1 dB, respectively, and OSNR reaches equilibrium.

In summary, by jointly adjusting the intra-band power and inter-band power under the control of the communication device, the first S+C+L system possesses the capability for long-distance transmission of multi-band optical signals. Furthermore, the joint adjustment of intra-band power and inter-band power under the control of the communication device exhibits fast convergence speed and low overall computational complexity.

In another feasible embodiment of the control method for the multiband optical transmission system of the present application, by replacing the transmission optical fiber of the first S+C+L band optical transmission system with the more commonly used G.652 optical fiber, the average loss coefficients for the S/C/L bands in G.652 optical fiber is 0.206 dB, 0.194 dB, and 0.194 dB respectively, and the span loss is changed to 22 dB. When keeping other conditions unchanged to form a second S+C+L band optical transmission system, the control method for the multiband optical transmission system proposed in the present application can still be well optimized when applied to this second S+C+L band optical transmission system..

Similarly, following the same process as described above, after jointly adjusting the intra-band power and inter-band power at each power adjustment point in each optical signal transmission multiplexing section of the second S+C+L band optical transmission system, an engineering evaluation is conducted on the maximum transmission distance of this modulation format in G.652 optical fiber under the S+C+L band. That is, controlling the net OSNR margin for the worst wave in the S/C/L bands to be equal and approximately equal to 2 dB, and the control system nonlinearity and filtering cost are less than 1 dB. The evaluation results show that in G.654E optical fiber, this modulation format supports transmission over 1200 km, the average single wave input fiber power of the S/C/L bands is 8.73 dB, 1.82 dB, and -1.01 dB, respectively; Raman additional losses of the S/C/L bands is 2.49 dB, -1.19 dB, and -1.01 dB, respectively; the OSNR unevenness of the S/C/L bands is 0.60 dB, 0.94 dB, and 0.60 dB, respectively; the maximum nonlinear cost of the S/C/L bands is 1.04 dB, 0.22 dB, and 0.01 dB, respectively. At this point, the OSNR net margin of the worst wave of the S/C/L bands is 2.1 dB, 2.1 dB, and 2.0 dB, respectively, and OSNR also reaches equilibrium.

Therefore, in conclusion, after the communication device controls to jointly adjust the intra-band power and inter-band power, the second S+C+L system also acquires the capability for long-distance transmission of multiband optical signals. That is, the control method for the multi-band optical transmission system of the present application can cover most networking scenarios in the S+C+L band.

Furthermore, embodiments of the present application further provide a communication device, including: a control unit for the multiband optical transmission system as described above, a memory, a processor, and a computer program stored in the memory and executable on the processor. The computer program is configured to implement the control method for the multiband optical transmission system as described above.

Furthermore, embodiments of the present application further provide a storage medium, the storage medium is a computer-readable storage medium, and the computer-readable storage medium stores a computer program. When executed by the processor, the computer program implements the control method for the multiband optical transmission system as described above.

In the present application, the terms "comprise", "include" or any other variation thereof are intended to cover a non-exclusive inclusion, such that a process, method, article or system that includes a list of elements not only includes those elements, but also includes other elements not expressly listed, or also includes elements inherent to the process, method, article or system. In a case of without further restrictions, an element defined by the statement "includes a/an......" does not exclude the existence of other identical elements in a process, method, article or system that includes this element.

Through the above description of the embodiments, those skilled in the art can clearly understand that each embodiment can be implemented by software plus a necessary general hardware platform, and certainly, it can also be implemented by hardware. Based on this understanding, the above technical solutions essentially or the part that contributes to the existing technology can be embodied in the form of software products, and the computer software product can be stored in a computer-readable storage medium (such as ROM/RAM, magnetic disk, optical disk and so on), including several instructions to cause a computer device (which can be a personal computer, server, network device or the like) to execute the methods described in various embodiments or certain parts of the embodiments.

The above embodiments are only some embodiments of the present application, and are not intended to limit the scope of the present application. Under the inventive concept of the present application, any equivalent structure or equivalent process transformation made by using the description and accompanying drawings of the present application, or directly or indirectly applied in other related technical fields, is included within the scope of the present application.

**Claims**

1. A control method for a multiband optical transmission system, **characterized by** comprising:

    determining multiple power adjustment points in an optical signal transmission multiplexing section of the multiband optical transmission system; and
    controlling the multiple power adjustment points to jointly adjust an intra-band power and an inter-band power to cause an optical transmission power of the multiband optical transmission system to be in a balanced state.

2. The control method for the multiband optical transmission system according to claim 1, wherein the power adjustment points comprise an optical power amplifier, a line optical amplifier, and an optical preamplifier;
    the controlling the multiple power adjustment points to jointly adjust the intra-band power and the inter-band power comprises:

    controlling the line optical amplifier and the optical preamplifier to adjust until an total output power of the line optical amplifier, the optical preamplifier, and the optical power amplifier within each band meets a first preset condition;
    after the total output power meets the first preset condition, controlling the optical power amplifier to adjust the power among each band to cause an output power among each band meets a second preset condition; and
    after adjusting the power among each band, controlling the optical power amplifier, the line optical amplifier, and the optical preamplifier to adjust a power slope within each band.

3. The control method for the multiband optical transmission system according to claim 2, further comprising:
    in response to that the total output power does not meet the first preset condition, iteratively executing an operation of the controlling the line optical amplifier and the optical preamplifier to adjust.

4. The control method for the multiband optical transmission system according to claims 2 or 3, further comprising:

    determining that the total output power meets the first preset condition in response to that a first total output power difference and a second total output power difference are less than a first preset threshold;
    wherein the first total output power difference is a difference in total output power among the line optical amplifier and the optical power amplifier after adjustment; the second total output power difference is a difference in total output power among the optical preamplifier and the optical power amplifier after adjustment.

5. The control method for the multiband optical transmission system according to claim 2, wherein the multiband optical signals transmitted by the multiband optical transmission system comprise a first band optical signal, a second band optical signal, and a third-band optical signal;

the controlling the optical power amplifier to adjust the inter-band power comprises:

controlling the optical power amplifier to increase a first output power of the first band optical signal and decrease a second output power of the second band optical signal; and

controlling the optical power amplifier to adjust a third output power of the third band optical signal according to an adjustment amount of the first output power and an adjustment amount of the second output power.

6. The control method for the multiband optical transmission system according to claim 5, further comprising:

continuously monitoring a total output power of the optical power amplifier for the multiband optical signal during a process of controlling the optical power amplifier to adjust the inter-band power;

in response to that the total output power of the optical power amplifier for the multiband optical signal is constant, monitoring power differences among the first output power, the second output power, and the third output power; and

in response to that the power difference is less than a second preset threshold, determining that the output power among each band meets a second preset condition.

7. The control method for the multiband optical transmission system according to claim 2, wherein the controlling the optical power amplifier, the line optical amplifier, and the optical preamplifier to adjust the power slope within each band comprises:

determining a band slope adjustment amount for each band according to a channel-level output power spectrum of the optical preamplifier at an end of the optical signal transmission multiplexing section; and

controlling the optical power amplifier, the line optical amplifier, and the optical preamplifier to respectively adjust the power slope within each band according to each band slope adjustment amount.

8. The control method for the multiband optical transmission system according to claim 7, wherein the determining the band slope adjustment amount for each band according to the channel-level output power spectrum of the optical preamplifier at the end of the optical signal transmission multiplexing section comprises:

measuring a channel-level output power spectrum of the optical preamplifier at the end of the optical signal transmission multiplexing section using an optical performance monitor;

determining a band slope of each band of an optical signal by fitting the channel-level output power spectrum; and

calculating the band slope adjustment amount for each band respectively according to each band slope.

9. The control method for the multiband optical transmission system according to claim 7, wherein the controlling the optical power amplifier, the line optical amplifier, and the optical preamplifier to respectively adjust the power slope within each band according to each band slope adjustment amount comprises:

determining a slope adjustment ratio of each of the optical power amplifier, the line optical amplifier, and the optical preamplifier using the band slope adjustment amount; and

controlling the optical power amplifier, the line optical amplifier, and the optical preamplifier to respectively adjust the power slope within each band according to their respective slope adjustment ratios.

10. The control method for the multiband optical transmission system according to claim 7, wherein, after the controlling the optical power amplifier, the line optical amplifier, and the optical preamplifier to respectively adjust the power slope within each band according to each band slope adjustment amount, the method further comprises:

in response to that a third preset condition is not met, iteratively executing operations of the controlling the optical power amplifier to adjust the power among each band and the controlling the optical power amplifier, the line optical amplifier, and the optical preamplifier to adjust the power slope within each band; wherein the third preset condition is that the output power adjustment amount among each band is less than a third preset threshold, and the band slope adjustment amount for each band is less than a fourth preset threshold.

11. The control method for the multiband optical transmission system according to claim 10, wherein in response to meeting the third preset condition, the method further comprises:

determining a target output power spectrum according to an actual output power spectrum of the optical signal transmission multiplexing section, and determining a channel-level power equalization amount of the optical signal transmission multiplexing section;
determining maximum nonlinear cost of the multiband optical transmission system according to the channel-level power equalization amount; and
determining and outputting an optical signal input fiber power of the multiband optical transmission system in response to the maximum nonlinear cost meeting a preset nonlinear effect condition.

12. The control method for the multiband optical transmission system according to claim 11, wherein after the determining the maximum nonlinear cost of the multiband optical transmission system according to the channel-level power equalization amount, the method further comprises:

in response to that the maximum nonlinear cost does not meet the nonlinear effect condition, iteratively executing that controlling multiple power adjustment points to perform joint adjustment operations of intra-band power and inter-band power until the maximum nonlinear cost meets the nonlinear effect condition.

13. The control method for the multiband optical transmission system according to claims 11 or 12, wherein the preset nonlinear effect condition comprises: a value of the maximum nonlinear cost is less than a fifth preset threshold, a value of a filtering cost for optical signal transmission is less than a sixth preset threshold, and net margins of optical signal-to-noise ratio for a worst wave in each band are equal and is greater than or equal to a seventh preset threshold.

14. A communication device, **characterized by** comprising: a memory, a processor, and a computer program stored in the memory and executable on the processor, the computer program being configured to implement the control method for the multiband optical transmission system according to any one of claims 1 to 13.

15. A computer-readable storage medium, **characterized in that** a computer program is stored on the storage medium, and the computer program implements the control method for the multiband optical transmission system according to any one of claims 1 to 13 when executed by a processor.

1005

| operation system |
| network communication module |
| user interface module |
| computer program |

memory

1001

processor

1002

1003    1004

user interface

network interface

FIG. 1

determining multiple power adjustment points in the optical signal transmission multiplexing section of the multiband optical transmission system — S10

controlling the multiple power adjustment points to jointly adjust an intra-band power and an inter-band power to cause an optical transmission power of the multiband optical transmission system to be in a balanced state — S20

FIG. 2

FIG. 3

OBA single-wave input fiber power initialization

Step 1: Intra-band total power pre-equalization

NO

difference in total output power between OLA/OPA and OBA $\{\Delta_{OTS}\}_{max}$<0.1 dB

YES

Step 2: S/C/L inter-band power equalization

Step 3: Intra-band slope equalization

NO

inter-band power adjustment amount $\{\Delta P_{Inter-band}\}_{max}$<0.1 dB intra-band slope adjustment amount $\{\Delta tilt\}_{max}$<0.1 dB

YES

Adjusting OBA single-wave input fiber power of each band

Step 4: Channel-level power equalization

YES

NO

nonlinear cost <1dB, filtering cost <1dB OSNR net margin for worst wave in each band (S/C/L)≥2dB

YES

determining the adjustment values of each component and the input fiber power in the final system

FIG. 4

FIG. 5

## INTERNATIONAL SEARCH REPORT

| International application No. |
|---|
| **PCT/CN2024/074755** |

| A. | CLASSIFICATION OF SUBJECT MATTER |
|---|---|

H04B10/25(2013.01)i

According to International Patent Classification (IPC) or to both national classification and IPC

| B. | FIELDS SEARCHED |
|---|---|

Minimum documentation searched (classification system followed by classification symbols)

IPC:H04B10/-

Documentation searched other than minimum documentation to the extent that such documents are included in the fields searched

Electronic data base consulted during the international search (name of data base and, where practicable, search terms used)

CNABS: CNTXT; CNKI; 百度; BAIDU; 万方; WANFANG: 多波段, 光传输, 功率, 均衡, 调节, 调整, 受激拉曼散射效应, 波段内, 波段间; DWPI; VEN; USTXT; EPTXT; WOTXT; JPTXT; KRTXT; IEEE; ISI_Web of Science: multiband, optical transmission, power, equal+, adjust+, Stimulated Raman Scattering effect, intraband, interband

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 112583489 A (ZTE CORP.) 30 March 2021 (2021-03-30)<br>description, paragraphs [0024]-[0066] | 1, 14-15 |
| A | CN 115242347 A (BEIJING BAIDU NETCOM SCIENCE AND TECHNOLOGY CO., LTD.) 25 October 2022 (2022-10-25)<br>entire document | 1-15 |
| A | CN 114614894 A (HUAWEI TECHNOLOGIES CO., LTD.) 10 June 2022 (2022-06-10)<br>entire document | 1-15 |
| A | CN 103227681 A (FIBERHOME TELECOMMUNICATION TECHNOLOGIES CO., LTD.) 31 July 2013 (2013-07-31)<br>entire document | 1-15 |
| A | US 2023208548 A1 (FUJITSU LTD.) 29 June 2023 (2023-06-29)<br>entire document | 1-15 |
| A | US 2022069903 A1 (CIENA CORP.) 03 March 2022 (2022-03-03)<br>entire document | 1-15 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **1.4月2024（01.04.2024）** | **08 April 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/074755**

| Patent document cited in search report | | | Publication date (day/month/year) | Patent family member(s) | | | Publication date (day/month/year) |
|---|---|---|---|---|---|---|---|
| CN | 112583489 | A | 30 March 2021 | None | | | |
| CN | 115242347 | A | 25 October 2022 | None | | | |
| CN | 114614894 | A | 10 June 2022 | None | | | |
| CN | 103227681 | A | 31 July 2013 | CN | 103227681 | B | 06 July 2016 |
| US | 2023208548 | A1 | 29 June 2023 | JP | 2023096512 | A | 07 July 2023 |
| US | 2022069903 | A1 | 03 March 2022 | US | 11569907 | B2 | 31 January 2023 |

Form PCT/ISA/210 (patent family annex) (July 2022)

**REFERENCES CITED IN THE DESCRIPTION**

**Patent documents cited in the description**

- CN 202310801200